# EUROPEAN PATENT SPECIFICATION

(11) **EP 3 670 877 B1**
(45) Date of publication and mention of the grant of the patent: **29.09.2021**
(21) Application number: 18846075.2
(22) Date of filing: 07.08.2018
(51) Int. Cl.: F02D 11/10, F02M 35/10, F02M 35/16, B62K 11/04, F02D 9/10

(54) **INTERNAL-COMBUSTION ENGINE AND SADDLE-TYPE VEHICLE**
VERBRENNUNGSMOTOR UND SATTELFAHRZEUG
MOTEUR À COMBUSTION INTERNE ET VÉHICULE DU TYPE À SELLE

(30) Priority: 17.08.2017 JP 2017157427
(43) Date of publication of application: 24.06.2020
(73) Proprietor: Yamaha Hatsudoki Kabushiki Kaisha, Iwata-shi, Shizuoka 438-8501 (JP)
(72) Inventor: NISHIWAKI, Ryoji, Iwata-shi Shizuoka 438-8501 (JP)
(74) Representative: Grünecker Patent- und Rechtsanwälte PartG mbB
(86) International application number: PCT/JP2018/029559
(87) International publication number: WO 2019/035389

(56) References cited:
- CN-B- 101 634 270
- JP-A- 2009 197 816
- JP-A- 2009 197 816
- JP-A- 2010 007 485
- JP-A- 2010 084 665
- JP-A- 2012 197 774
- JP-A- 2012 197 774
- JP-A- 2016 180 332
- JP-A- 2016 180 332

## Description

### [Technical Field]

The present invention relates to an internal combustion engine according to the preamble of independent claim 1 and a straddled vehicle. Such an engine can be taken from the prior art document JP 2016 180332 A.

### [Background Art]

Conventional internal combustion engines having an actuator for actuating a throttle valve, like the engine of JP 2009 197816, and straddled vehicles having such internal combustion engines are known. For example, Patent Document No. 1 discloses an internal combustion engine having a motor for actuating a throttle valve, and a motorcycle having such an internal combustion engine.

The motorcycle includes an intake pipe extending upward from the rear surface of a cylinder head, a throttle body linked to the intake pipe, and an air chamber linked to the throttle body. A motor is arranged rearward of the throttle body. The motor and the valve shaft of the throttle valve are linked together by a link mechanism. A fuel injector is inserted in the intake pipe. A portion of the fuel injector that is located outside the intake pipe is arranged rearward of the intake pipe.

### [Prior Art Documents]

### [Patent Documents]

[Patent Document No. 1] Japanese Laid-Open Patent Publication No. 2014-159775

### [Summary of the Invention]

### [Problems to be Solved by the Invention]

With the internal combustion engine described above, the throttle body and the intake pipe together form an intake passage that links together the air chamber and the intake port of the cylinder head. Both of the motor and the fuel injector are arranged rearward of the intake passage. That is, the motor and the fuel injector are both arranged on one side of the intake passage that is opposite to the side on which the top of the cylinder head is arranged. With the internal combustion engine described above, it may be difficult to both realize a compact arrangement of the motor and the fuel injector and realize a desirable injection direction of the fuel injector.

It is an object of the present invention, which has been made in view of the above, to provide an internal combustion engine including an actuator for actuating a throttle valve and a fuel injector, wherein it is possible to both realize a compact arrangement of the actuator and the fuel injector and realize a desirable injection direction of the fuel injector, and to provide a straddled vehicle having such an internal combustion engine.

### [Means for Solving the Problems]

An internal combustion engine disclosed herein includes: a cylinder body having a cylinder; a cylinder head having an intake port that communicates with the cylinder and connected to the cylinder body; an intake valve supported on the cylinder head for opening/closing the intake port; an intake camshaft supported on the cylinder head and provided with an intake cam for actuating the intake valve; a throttle body connected to the cylinder head and formed with a passage therein; a throttle valve arranged inside the throttle body; a valve shaft provided on the throttle valve and rotatably supported on the throttle body; an actuator for outputting a driving force; a power transmission mechanism having a driving link portion linked to the actuator and a driven link portion linked to the valve shaft for transmitting the driving force of the actuator to the valve shaft; an intake passage including at least the intake port and the passage of the throttle body; and a fuel injector for injecting fuel into the intake passage, wherein the fuel injector has an injection port arranged on a side of the intake valve relative to the valve shaft in a flow direction of an intake air in the intake passage. The actuator and the fuel injector are arranged on a side of the cylinder head with respect to a center line of the throttle body, as seen along an axial direction of the intake camshaft. The actuator is arranged on a side opposite to the cylinder head with respect to a straight line that passes through an axis of the valve shaft and is perpendicular to the center line of the throttle body, as seen along an axial direction of the intake camshaft.

With the internal combustion engine described above, the actuator and the fuel injector are arranged on the side of the cylinder head with respect to the intake passage, as seen along the axial direction of the intake camshaft. The actuator and the fuel injector do not protrude on the side opposite to the cylinder head with respect to the intake passage. Therefore, it is possible to realize a compact arrangement of the actuator and the fuel injector. Since the fuel injector is arranged on the side of the cylinder head with respect to the intake passage, the angle formed between the injection direction of the fuel injector and the center line of the cylinder can be made relatively small. Then, it is possible to realize a desirable injection direction of the fuel injector. Thus, with the internal combustion engine described above, it is possible to both realize a compact arrangement of the actuator and the fuel injector and realize a desirable injection direction of the fuel injector.

According to one preferred embodiment, the valve shaft is arranged on a side of the cylinder body with respect to a straight line that passes through an axis of the intake camshaft and is perpendicular to a center line of the cylinder, as seen along an axial direction of the intake camshaft.

According to one preferred embodiment, the actuator has a motor. As seen along an axial direction of the intake camshaft, the motor includes a first end portion that intersects with a straight line that passes through a center of the motor and is perpendicular to a center line of the cylinder, and a second end portion that intersects with a straight line that passes through the center of the motor and is perpendicular to the center line of the cylinder, wherein the second end portion is farther away from the center line of the cylinder than the first end portion. As seen along an axial direction of the intake camshaft, a distance between the axis of the valve shaft and the center line of the cylinder is shorter than a distance between the second end portion and the center line of the cylinder.

According to the embodiment described above, the distance between the throttle valve and the intake port is short. Therefore, the internal combustion engine can be made compact.

According to one preferred embodiment, the actuator includes a motor having a rotation shaft. The valve shaft is arranged parallel to the rotation shaft of the motor.

According to the embodiment described above, the motor can be arranged in a compact arrangement.

According to one preferred embodiment, a combustion chamber is formed inside the cylinder body and the cylinder head. The intake port has an intake opening facing the combustion chamber. The intake valve has a shaft portion and an umbrella portion provided at a distal end of the shaft portion for opening/closing the intake opening. As seen along an axial direction of the intake camshaft, the fuel injector is arranged so that a center line of the injection port intersects with the umbrella portion when the intake valve closes the intake opening.

According to the embodiment described above, it is possible to suppress adhesion of fuel injected from the fuel injector on the wall surface of the intake port, and it is possible to improve the performance of the internal combustion engine.

According to one preferred embodiment, as seen along an axial direction of the intake camshaft, a smaller one of angles that are formed between a center line of the injection port of the fuel injector and a center line of the cylinder is 60 degrees or less.

According to the embodiment described above, it is possible to realize a compact arrangement of the fuel injector and realize a desirable injection direction.

According to one preferred embodiment, the internal combustion engine described above includes an intake pipe having an upstream end portion and a downstream end portion that is connected to the throttle body. The power transmission mechanism includes a first gear linked to the actuator, a second gear linked to the first gear, and a third gear linked to the second gear. As seen along an axial direction of the intake camshaft, a center line of the intake pipe includes a first portion that intersects with a straight line that passes through a center of the first gear and is perpendicular to a center line of the cylinder, a second portion that intersects with a straight line that passes through a center of the second gear and is perpendicular to a center line of the cylinder, and a third portion that intersects with a straight line that passes through a center of the third gear and is perpendicular to the center line of the cylinder. The second portion is located on a side of the intake port relative to the first portion, and the third portion is located on the side of the intake port relative to the second portion.

According to the embodiment described above, the actuator can be arranged farther away from the cylinder head. The first to third gears can be arranged along the intake pipe, and the actuator and the power transmission mechanism can be arranged in a compact arrangement.

According to one preferred embodiment, the power transmission mechanism is arranged at a position overlapping with the fuel injector, as seen along an axial direction of the intake camshaft.

According to the embodiment described above, the fuel injector and the power transmission mechanism can be arranged in a compact arrangement.

According to one preferred embodiment, the cylinder body includes another cylinder. The cylinder head has another intake port that communicates with the other cylinder. The internal combustion engine further includes another intake valve supported on the cylinder head for opening/closing the other intake port. The intake camshaft is provided with another intake cam for actuating the other intake valve. The internal combustion engine includes another throttle body connected to the cylinder head, and another throttle valve arranged inside the other throttle body and linked to the valve shaft. The valve shaft has a shaft end portion extending away from the throttle valve and the other throttle valve. The power transmission mechanism is linked to the shaft end portion.

According to the embodiment described above, while having a plurality of cylinders, it is possible to both realize a compact arrangement of the actuator and the fuel injector and realize a desirable injection direction of the fuel injector.

According to one preferred embodiment, the internal combustion engine includes an air cleaner connected to the intake passage. As seen along an axial direction of the intake camshaft, the air cleaner is arranged on a side opposite to the cylinder body with respect to a straight line that passes through a portion of the cylinder head that is farthest away from the cylinder body and is perpendicular to a center line of the cylinder.

According to the embodiment described above, as seen along the axial direction of the intake camshaft, the actuator and the fuel injector can be arranged in a compact arrangement in a region that is surrounded by the air cleaner, the cylinder head and the intake passage.

A straddled vehicle disclosed herein includes the internal combustion engine described above, wherein the cylinder head is arranged forward relative to the cylinder body in a vehicle front-rear direction, and the air cleaner is arranged forward relative to the cylinder head in the vehicle front-rear direction.

According to the embodiment described above, the effects described above can be realized with so-called forward leaning engines.

### [Effect of the Invention]

According to the present invention, it is possible to provide an internal combustion engine including an actuator for actuating a throttle valve and a fuel injector, wherein it is possible to both realize a compact arrangement of the actuator and the fuel injector and realize a desirable injection direction of the fuel injector, and to provide a straddled vehicle having such an internal combustion engine.

### [Brief Description of the Drawings]

[FIG. **1**] A side view of a motorcycle according to one embodiment.
[FIG. **2**] A partial cross-sectional view of an internal combustion engine of the motorcycle.
[FIG. **3**] A cross-sectional view of a power transmission mechanism.
[FIG. **4**] A schematic diagram showing a link between a gear of a power transmission mechanism and a valve shaft of a throttle valve.
[FIG. **5**] A partial perspective view of the internal combustion engine.
[FIG. **6**] A partial plan view of the internal combustion engine.
[FIG. **7**] A partial cross-sectional view of the internal combustion engine.

### [Embodiments of the Invention]

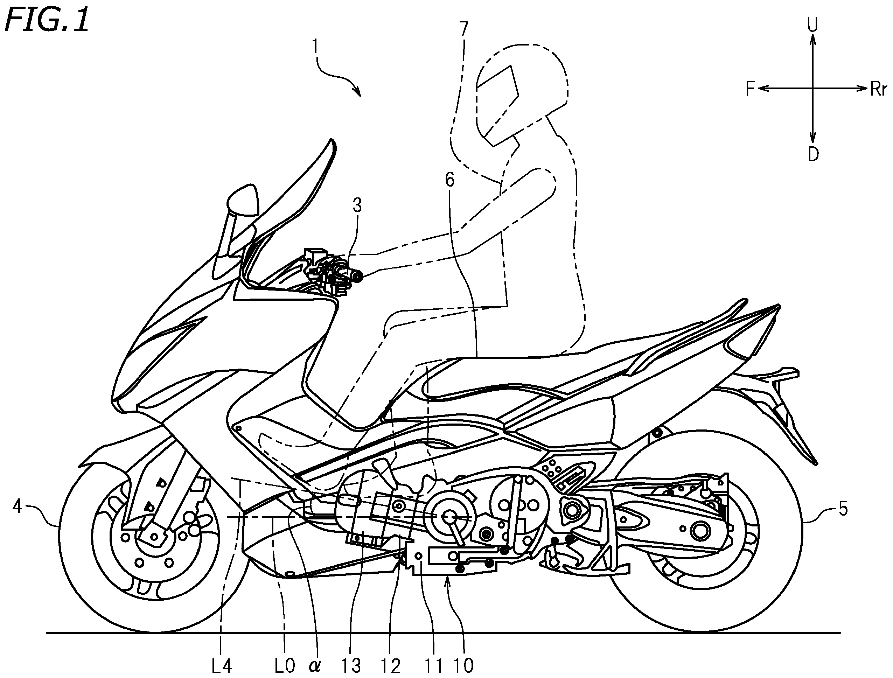

One embodiment will now be described with reference to the drawings. As shown in FIG. **1**, a straddled vehicle according to the present embodiment is a scooter-type motorcycle **1**. The motorcycle **1** includes a vehicle frame (not shown) having a head pipe (not shown), a steering handle **3** supported on the head pipe so that the steering handle **3** can rotate left and right, a front wheel **4**, a rear wheel **5**, a seat **6**, and an internal combustion engine **10**.

The terms front, rear, left, right, up and down, as used in the description below, refer to front, rear, left, right, up and down, respectively, as seen from a virtual passenger **7** seated on the seat **6** while the motorcycle **1** is standing upright on a horizontal surface with no load thereon, unless specified otherwise. Note that no load means that there is no passenger **7** on the motorcycle **1** and the motorcycle **1** has no fuel. The designations F, Rr, L, R, U and D, as used in the figures, refer to front, rear, left, right, up and down, respectively.

The internal combustion engine **10** includes a crankcase **11**, a cylinder body **12** and a cylinder head **13**. The cylinder head **13** is connected to the cylinder body **12**, and the cylinder body **12** is connected to the crankcase **11**. In the present embodiment, the cylinder head **13** is arranged forward of the cylinder body **12**, and the cylinder body **12** is arranged forward of the crankcase **11**.

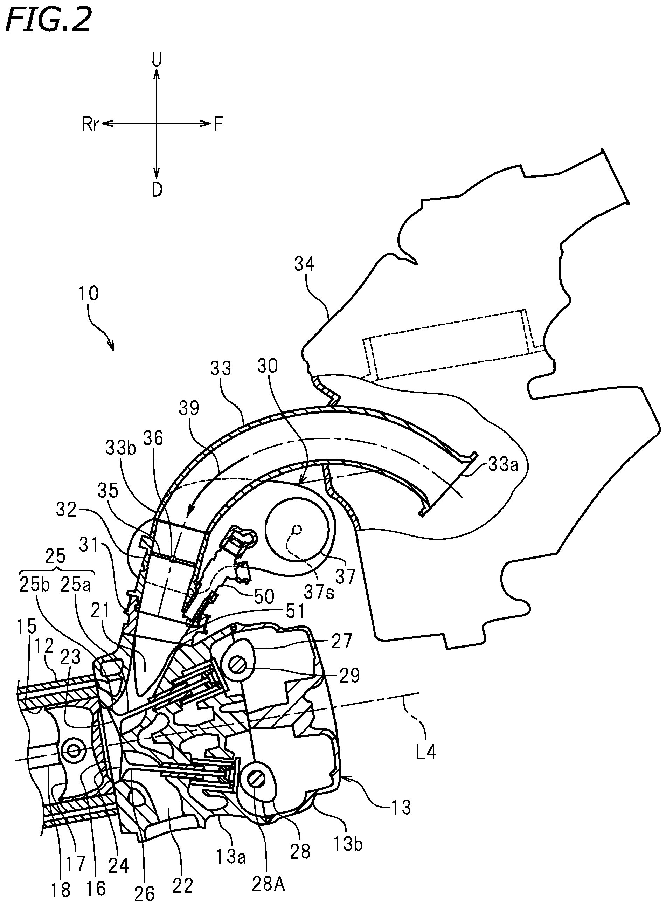

As shown in FIG. **2**, the cylinder head **13** includes a head body **13a** and a head cover **13b**. In the present embodiment, the head body **13a** and the head cover **13b** are separate members and are secured to each other. Note however that the head body **13a** and the head cover **13b** may be integral with each other. The cylinder body **12** includes a cylinder **15**. A combustion chamber **16** is formed inside the cylinder body **12** and the cylinder head **13**. A piston **17** is arranged inside the cylinder **15**. A crankshaft (not shown) is arranged inside the crankcase **11**. The piston **17** and the crankshaft are linked together by a connecting rod **18**.

The internal combustion engine **10** is a 4-cycle 2-cylinder engine. Although not shown in the drawings, the cylinder body **12** includes another cylinder **15**. The cylinder **15** and the other cylinder **15** are arranged next to each other in the left-right direction. Another piston **17** is arranged inside the other cylinder **15**. The other piston **17** and the crankshaft are linked together by another connecting rod **18**.

The designation **L4** represents the center line of the cylinder **15** (hereinafter referred to as the cylinder center line). As shown in FIG. **1**, in the present embodiment, the angle α formed between the horizontal line **L0** and the cylinder center line **L4**, as the vehicle is seen from the side, is 45 degrees or less. Note that an angle formed between two straight lines, as used in the present specification, refers to one of the two angles formed by the two straight lines (i.e., two angles that are supplementary to each other) that is 90 degrees or less. α may be 30 degrees or less, may be 15 degrees or less, or may be 10 degrees or less.

As shown in FIG. **2**, the cylinder head **13** includes an intake port **21** and an exhaust port **22** that communicate with the inside of the cylinder **15**. An intake opening **23** facing the combustion chamber **16** is formed at the downstream end of the intake port **21** in the flow direction of the intake air. An exhaust opening **24** facing the combustion chamber **16** is formed at the upstream end of the exhaust port **22** in the flow direction of the exhaust air. Supported on the cylinder head **13** are an intake valve **25** for opening/closing the intake opening **23** of the intake port **21,** an exhaust valve **26** for opening/closing the exhaust opening **24** of the exhaust port **22**, an intake camshaft **29** provided with an intake cam **27** for actuating the intake valve **25**, and an exhaust camshaft **28A** provided with an exhaust cam **28** for actuating the exhaust valve **26.**

A throttle body **32** is connected to the intake port **21** of the cylinder head **13** via a joint member **31**. An intake pipe **33** is connected to the throttle body **32.** An air cleaner **34** is connected to the intake pipe **33**. An upstream end portion **33a** of the intake pipe **33** is open inside the air cleaner **34**. A downstream end portion **33b** of the intake pipe **33** is connected to the throttle body **32**. The intake pipe **33**, the throttle body **32**, the joint member **31** and the intake port **21** together form an intake passage **39** extending from the air cleaner **34** to the combustion chamber **16**. The intake passage **39** is a so-called downdraft intake passage.

A passage, through which the intake air passes, is formed inside the throttle body **32**. A throttle valve **35** is arranged inside the throttle body **32**. The throttle valve **35** is provided with a valve shaft **36**. The valve shaft **36** is rotatably supported on the throttle body **32**. The valve shaft **36** is arranged parallel to the intake camshaft **29** and the exhaust camshaft **28A.**

As described above, the internal combustion engine **10** is a 2-cylinder engine. The internal combustion engine **10** includes another intake port **21**, another exhaust port **22**, another intake valve **25**, another exhaust valve **26**, another intake cam **27** and another exhaust cam **28**. These components are similar to their counterparts described above, and will not be described below. The other intake cam **27** is provided on the intake camshaft **29**, and the other exhaust cam **28** is provided on the exhaust camshaft **28A**. The internal combustion engine **10** includes another joint member **31**, another throttle body **32** and another intake pipe **33**. These components are also similar to their counterparts described above, and will not be described below. Another throttle valve **35** is arranged inside the other throttle body **32**. Note that the other throttle valve **35** is connected to the valve shaft **36**. The two throttle valves **35** are linked together by the valve shaft **36**.

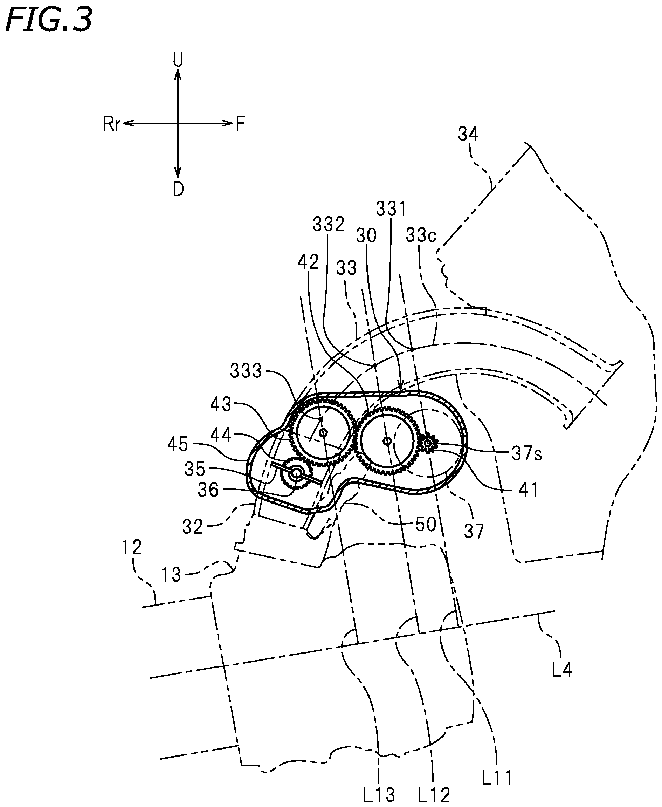

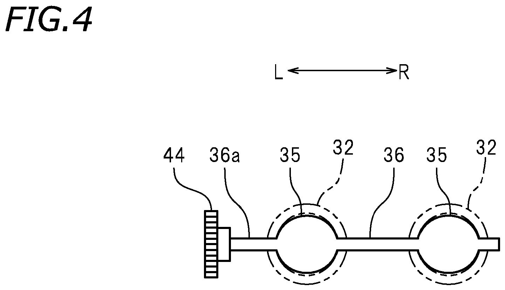

The internal combustion engine **1** includes an electric motor **37** as an actuator for actuating the throttle valve **35** and the other throttle valve **35**. A rotation shaft **37s** of the motor **37** and the valve shaft **36** are arranged parallel to each other. As shown in FIG. **3**, the rotation shaft **37s** of the motor **37** and the valve shaft **36** are linked together by a power transmission mechanism **30**. With the power transmission mechanism **30** interposed between the motor **37** and the valve shaft **36**, the motor **37** is arranged at a position relatively far away from the throttle valve **35**. The power transmission mechanism **30** according to the present embodiment includes a first gear **41** linked to the rotation shaft **37s** of the motor **37**, a second gear **42** linked to the first gear **41**, a third gear **43** linked to the second gear **42**, and a fourth gear **44** linked to the third gear **43**. The fourth gear **44** is linked to the valve shaft **36**. Note that the first gear **41** is an example of the driving link portion linked to the actuator. The fourth gear **44** is an example of the driven link portion linked to the valve shaft **36**. The power transmission mechanism **30** is configured to transmit the driving force of the motor **37** to the valve shaft **36**. The throttle valve **35** and the other throttle valve **35** are driven by the motor **37** to rotate. As shown in FIG. **4**, the valve shaft **36** includes a shaft end portion **36a** extending away from the throttle valve **35** and the other throttle valve **35**. Herein, the shaft end portion **36a** extends leftward from both throttle valves **35**. The fourth gear **44** is linked to the shaft end portion **36a**.

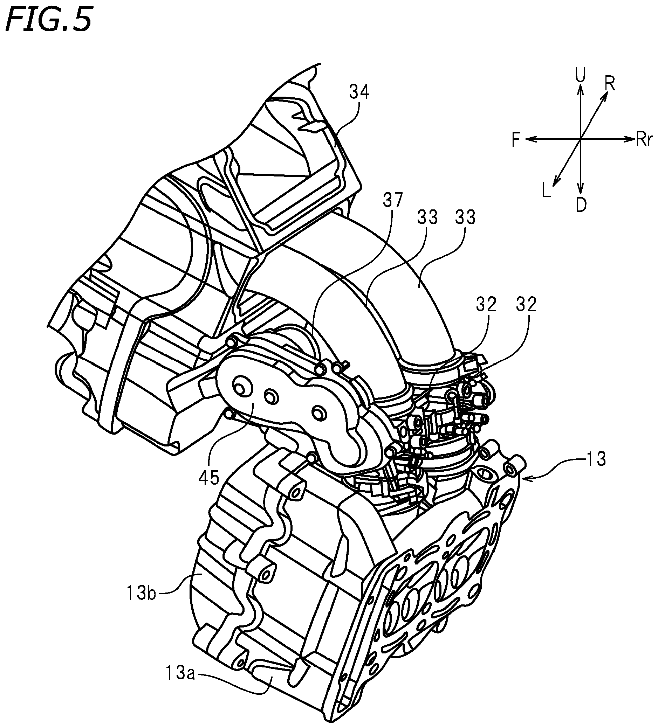

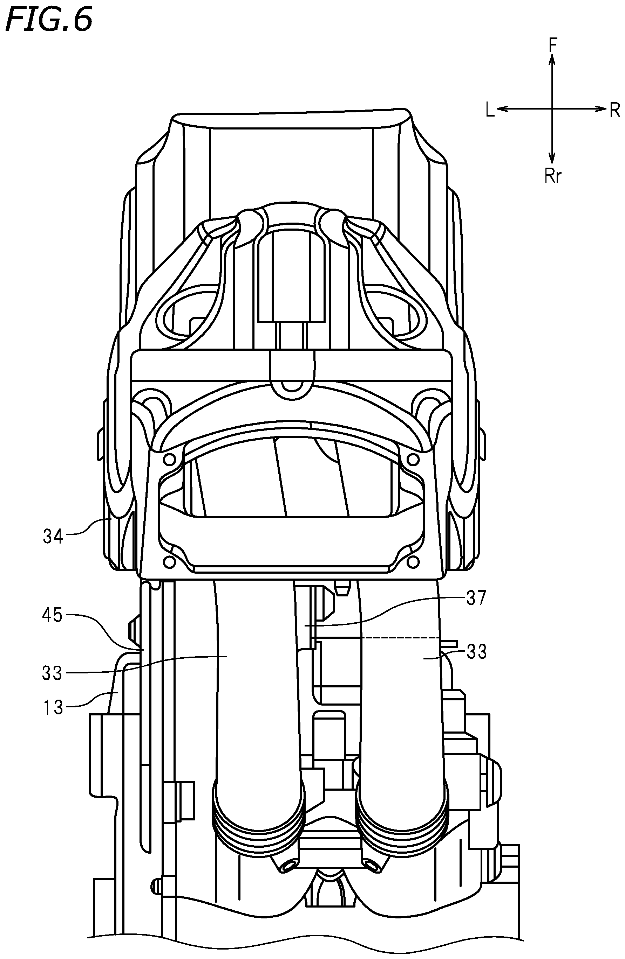

The first to fourth gears **41** to **44** are accommodated in a gearbox **45**. As shown in FIG. **5**, the gearbox **45** is arranged leftward of the two throttle bodies **32**. As shown in FIG. **6**, the motor **37** is arranged rightward of the gearbox **45**. As seen from above, a portion of the motor **37** overlaps with the left intake pipe **33**. As seen from above, another portion of the motor **37** is arranged between the left intake pipe **33** and the right intake pipe **33**. As seen from above, the air cleaner **34** is arranged forward relative to the cylinder head **13**. As seen from above, at least a portion of the motor **37** is arranged forward relative to the cylinder head **13**. As seen from above, at least a portion of the motor **37** is arranged rearward relative to the air cleaner **34**.

As shown in FIG. **2****,** the internal combustion engine **10** includes a fuel injector **50**. Since the internal combustion engine **10** is a 2-cylinder engine, it includes two fuel injectors **50**. The two fuel injectors **50** are arranged next to each other in the left-right direction. The fuel injectors **50** are attached to the respective throttle bodies **32**. The fuel injector **50** includes an injection port **51** for injecting fuel. The injection port **51** is arranged on the side of the intake valve **25** relative to the valve shaft **36** in the flow direction of the intake air in the intake passage **39**. In other words, the injection port **51** is arranged on the downstream side of the intake passage **39** relative to the valve shaft **36**.

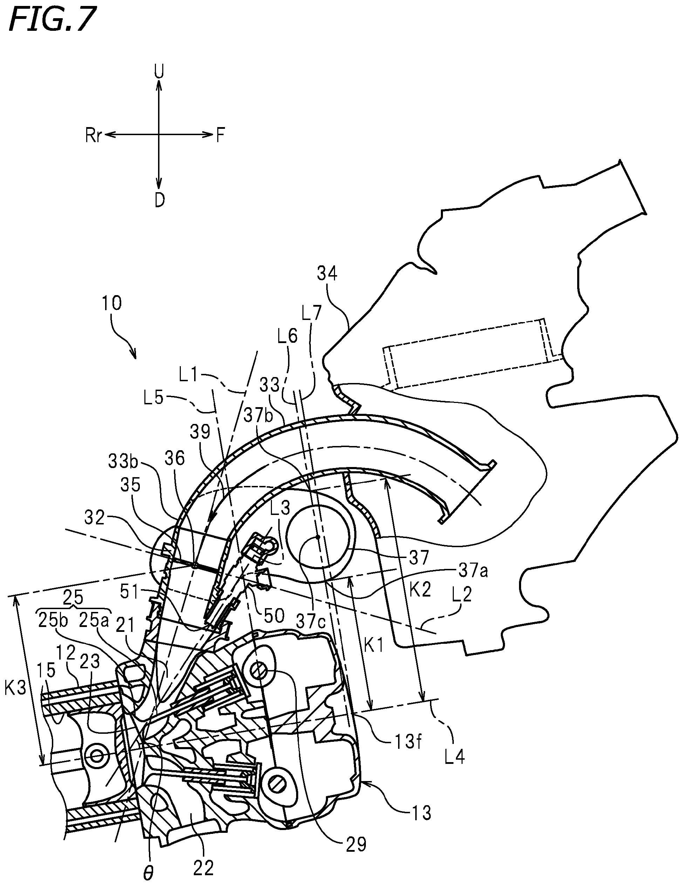

The intake valve **25** includes a shaft portion **25a**, and an umbrella portion **25b** provided at the distal end of the shaft portion **25a** for opening/closing the intake opening **23**. As shown in FIG. **7**, as seen along the axial direction of the intake camshaft **29**, the fuel injector **50** is arranged so that the center line **L3** of the injection port **51** intersects with the umbrella portion **25b** when the intake valve **25** closes the intake opening **23**. As seen along the axial direction of the intake camshaft **29**, the angle **θ** formed between the center line **L3** of the injection port **51** and the cylinder center line **L4** is set to be 60 degrees or less.

As seen along the axial direction of the intake camshaft **29**, the point at which the center line of the shaft portion **25a** of the intake valve **25** and the distal end of the umbrella portion **25b** intersect with each other is denoted as the first point, the center **37c** of the rotation shaft **37s** of the motor **37** as the second point, and the center of the valve shaft **36** as the third point. As seen along the axial direction of the intake camshaft **29**, the injection port **51** is arranged inside the triangle whose vertexes are the first to third points.

As shown in FIG. **2**, the injection port **51** is arranged at a position closer to the intake opening **23** than the valve shaft **36**. The valve shaft **36** is arranged at a position closer to the intake opening **23** than the rotation shaft **37s** of the motor **37**. Herein, the injection port **51** is arranged downward relative to the valve shaft **36**, and the valve shaft **36** is arranged downward relative to the rotation shaft **37s** of the motor **37**.

As shown in FIG. 7, as seen along the axial direction of the intake camshaft **29**, the motor **37** and the fuel injector **50** are arranged so as not to protrude, relative to the intake passage **39**, on the side opposite to the cylinder head **13**. As seen along the axial direction of the intake camshaft **29**, the motor **37** and the fuel injector **50** are arranged on the side of the cylinder head **13** with respect to the center line **L1** of the throttle body **32**. Herein, the motor **37** and the fuel injector **50** are arranged forward of the center line **L1** of the throttle body **32**. As seen along the axial direction of the intake camshaft **29**, the motor **37** is arranged on the side opposite to the cylinder head **13** with respect to the straight line **L2**, which passes through the axis of the valve shaft **36** and is perpendicular to the center line **L1** of the throttle body **32**. Herein, the motor **37** is arranged upward of the straight line **L2**.

As seen along the axial direction of the intake camshaft **29**, the valve shaft **36** is arranged on the side of the cylinder body **12** with respect to the straight line **L5**, which passes through the axis of the intake camshaft **29** and is perpendicular to the cylinder center line **L4**. Herein, the valve shaft **36** is arranged rearward of the straight line **L5**. As described above, with the internal combustion engine **10** according to the present embodiment, the distance between the throttle valve **35** and the intake port **21** is short.

As seen along the axial direction of the intake camshaft **29**, the motor **37** has a first end portion **37a** and a second end portion **37b** that intersect with the straight line **L6**, which passes through the center **37c** of the motor **37** (i.e., the center of the rotation shaft **37s** of the motor **37**) and is perpendicular to the cylinder center line **L4**. The second end portion **37b** is farther away from the cylinder center line **L4** than the first end portion **37a**. The distance **K2** between the second end portion **37b** and the cylinder center line **L4** is longer than the distance **K1** between the first end portion **37a** and the cylinder center line **L4**. K2>K1. As seen along the axial direction of the intake camshaft **29**, the distance **K3** between the axis of the valve shaft **36** and the cylinder center line **L4** is shorter than the distance **K2** between the second end portion **37b** and the cylinder center line **L4**. K3<K2. As described above, with the internal combustion engine **1** according to the present embodiment, the distance between the throttle valve **35** and the intake port **21** is short.

As shown in FIG. **3**, as seen along the axial direction of the intake camshaft **29**, the center line **33c** of the intake pipe **33** includes a first portion **331** intersecting with the straight line **L11**, which passes through the center of the first gear **41** and is perpendicular to the cylinder center line **L4**, a second portion **332** intersecting with the straight line **L12**, which passes through the center of the second gear **42** and is perpendicular to the cylinder center line **L4**, and a third portion **333** intersecting with the straight line **L13**, which passes through the center of the third gear **43** and is perpendicular to the cylinder center line **L4**. The second portion **332** is located on the side of the intake port **21** relative to the first portion **331**. The third portion **333** is located on the side of the intake port **21** relative to the second portion **332**. Herein, the second portion **332** is located rearward and downward of the first portion **331**. The third portion **333** is located rearward and downward of the second portion **332**. Thus, the first gear **41**, the second gear **42** and the third gear **43** are arranged in this order in the flow direction of the intake air through the intake pipe **33**.

As shown in FIG. **2** and FIG. **3**, the power transmission mechanism **30** is arranged at a position overlapping with the fuel injector **50**, as seen along the axial direction of the intake camshaft **29**.

As shown in FIG. 7, as seen along the axial direction of the intake camshaft **29**, the air cleaner **34** is arranged on the side opposite to the cylinder body **12** with respect to the straight line **L7**, which passes through a portion **13f** of the cylinder head **13** that is farthest away from the cylinder body **12** and is perpendicular to the cylinder center line **L4**. Herein, the air cleaner **34** is arranged forward of the straight line **L7**.

As described above, with the internal combustion engine **10** according to the present embodiment, the power transmission mechanism **30** is interposed between the motor **37** and the valve shaft **36**, and the motor **37** is arranged at a position relatively far away from the throttle body **32**. Then, the fuel injector **50** is arranged in the space between the motor **37** and the throttle body **32**, which is created as the motor **37** is moved away from the throttle body **32**. With the internal combustion engine **10**, the throttle body **32** and the fuel injector **50** can be arranged at positions that are optimal design-wise while minimizing the influence on the peripheral components of the throttle body **32** and the fuel injector **50**. Effects of the internal combustion engine **10** according to the present embodiment will now be described.

As shown in FIG. 7, with the internal combustion engine **10** according to the present embodiment, the motor **37** and the fuel injector **50** are arranged on the side of the cylinder head **13** with respect to the intake passage **39**, as seen along the axial direction of the intake camshaft **29**. Therefore, the motor **37** and the fuel injector **50** do not protrude on the side opposite to the cylinder head **13** with respect to the intake passage **39**. Herein, the motor **37** and the fuel injector **50** do not protrude upward of the intake passage **39**. Therefore, it is possible to realize a compact arrangement of the motor **37** and the fuel injector **50**. Since the fuel injector **50** is arranged on the side of the cylinder head **13** with respect to the intake passage **39**, the angle **θ** formed between the injection direction **L3** of the fuel injector **50** and the cylinder center line **L4** can be made relatively small. Then, it is possible to realize a desirable injection direction of the fuel injector **50**. Thus, with the internal combustion engine **10** according to the present embodiment, it is possible to both realize a compact arrangement of the motor **37** and the fuel injector **50** and realize a desirable injection direction of the fuel injector **50**.

As shown in FIG. 7, with the internal combustion engine **10** according to the present embodiment, the valve shaft **36** is arranged on the side of the cylinder body **12** with respect to the straight line **L5**. The distance **K3** between the axis of the valve shaft **36** and the center line **L4** of the cylinder **15** is shorter than the distance **K2** between the second end portion **37b** of the motor **37** and the center line **L4** of the cylinder **15**. With the internal combustion engine **10** according to the present embodiment, the distance between the throttle valve **35** and the intake port **21** is short. Since the distance between the throttle valve **35** and the intake port **21** is short, the internal combustion engine **10** can be made compact.

With the internal combustion engine **10** according to the present embodiment, the valve shaft **36** and the rotation shaft **37s** of the motor **37** are arranged parallel to each other. Therefore, the motor **37** can be arranged in a compact arrangement.

As described above, as seen along the axial direction of the intake camshaft **29**, the fuel injector **50** is arranged so that the center line **L3** of the injection port **51** intersects with the umbrella portion **25b** when the intake valve **25** closes the intake opening **23**. Therefore, it is possible to suppress adhesion of fuel injected from the injection port **51** on the wall surface of the intake port **21**. Thus, it is possible to improve the performance of the internal combustion engine **10**.

With the internal combustion engine **10**, as seen along the axial direction of the intake camshaft **29**, the angle **θ** formed between the center line **L3** of the injection port **51** and the cylinder center line **L4** is 60 degrees or less. With the internal combustion engine **10**, it is possible to realize a compact arrangement of the fuel injector **50** and realize a desirable injection direction.

As shown in FIG. **3**, the second portion **332** of the center line **33c** of the intake pipe **33** is located on the side of the intake port **21** relative to the first portion **331**, and the third portion **333** is located on the side of the intake port **21** relative to the second portion **332**. The first gear **41**, the second gear **42** and the third gear **43** of the power transmission mechanism **30** are arranged in this order from the upstream side toward the downstream side in the flow direction of the intake air of the intake pipe **33**. With such an arrangement of the first to third gears **41** to **43**, the motor **37** can be arranged farther away from the cylinder head **13**, and the first to third gears **41** to **43** can be arranged along the intake pipe **33**. Therefore, the motor **37** and the power transmission mechanism **30** can be arranged in a compact arrangement.

The power transmission mechanism **30** is arranged at a position overlapping with the fuel injector **50**, as seen along the axial direction of the intake camshaft **29**. Therefore, the total dimension in the front-rear direction and the total dimension in the up-down direction of the fuel injector **50** and the power transmission mechanism **30** can be made small. Thus, the fuel injector **50** and the power transmission mechanism **30** can be arranged in a compact arrangement.

As shown in FIG. 7, as seen along the axial direction of the intake camshaft **29**, the air cleaner **34** is arranged on the side opposite to the cylinder body **12** with respect to the straight line **L7**, which passes through the portion **13f** of the cylinder head **13** that is farthest away from the cylinder body **12** and is perpendicular to the cylinder center line **L4**. Then, as seen along the axial direction of the intake camshaft **29**, the motor **37** and the fuel injector **50** can be arranged in a compact arrangement in a region that is surrounded by the air cleaner **34**, the cylinder head **13** and the intake passage **39**.

Although one embodiment of the present invention has been described above, the present invention is not limited to the embodiment described above. Next, examples of other embodiments will be described briefly.

The motorcycle **1** is not limited to a scooter-type motorcycle but may be a motorcycle of any other type. A straddled vehicle refers to a vehicle that is straddled by a passenger, and is not limited to a motorcycle. A straddled vehicle may be an ATV (All Terrain Vehicle) or an auto tricycle, for example.

The power transmission mechanism **30**, which connects together the motor **37** and the valve shaft **36**, does not need to include gears. There is no limitation as long as the power transmission mechanism **30** is capable of transmitting the driving force of the motor **37** to the valve shaft **36**. The power transmission mechanism **30** may include a transmission belt, for example.

There is no limitation on the type of the motor **37**. The actuator for actuating the throttle valve **35** is not limited to the motor **37**.

The internal combustion engine **10** is not limited to a forward leaning engine. The angle α described above may be greater than 45 degrees. The air cleaner **34** does not need to be arranged forward of the cylinder head **13**. The air cleaner **34** may be arranged upward of the cylinder head **13**.

The joint member **31** may be absent between the throttle body **32** and the cylinder head **13**. While the throttle body **32** may be indirectly connected to the intake port **21** of the cylinder head **13**, the throttle body **32** may be directly connected to the intake port **21** of the cylinder head **13**.

The internal combustion engine **10** is not limited to a 2-cylinder engine. The internal combustion engine **10** may be a multi-cylinder engine having three or more cylinders. The internal combustion engine **10** may be a single-cylinder engine.

The terms and expressions used herein are used for explanation purposes and should not be construed as being restrictive. It should be appreciated that the terms and expressions used herein do not eliminate any equivalents of features illustrated and mentioned herein, but include various modifications falling within the claimed scope of the present invention. The present invention may be embodied in many different forms. The present disclosure is to be considered as providing examples of the principles of the invention. These examples are described herein with the understanding that such examples are not intended to limit the present invention to preferred embodiments described herein and/or illustrated herein. Hence, the present invention is not limited to the preferred embodiments described herein. The invention is defined by the appended claims.

### [Description of the Reference Numerals]

1: Motorcycle (straddled vehicle), 10: Internal combustion engine, 12: Cylinder body, 13: Cylinder head, 15: Cylinder, 16: Combustion chamber, 21: Intake port, 23: Intake opening, 25: Intake valve, 25a: Shaft portion, 25b: Umbrella portion, 27: Intake cam, 29: Intake camshaft, 30: Power transmission mechanism, 32: Throttle body, 33: Intake pipe, 33c: Center line of intake pipe, 34: Air cleaner, 35: Throttle valve, 36: Valve shaft, 36a: Shaft end portion, 37: Motor (actuator), 37a: First end portion, 37b: Second end portion, 37s: Rotation shaft of motor, 37c: Center of motor, 39: Intake passage, 41: First gear (driving link portion), 42: Second gear, 43: Third gear, 44: Fourth gear (driven link portion), 50: Fuel injector, 51: Injection port, 331: First portion, 332: Second portion, 333: Third portion, L1: Center line of throttle body, L2: Straight line that passes through axis of valve shaft and is perpendicular to center line of throttle body, L3: Center line of injection port, L4: Center line of cylinder, L5: Straight line that passes through axis of intake camshaft and is perpendicular to center line of cylinder, L6: Straight line that passes through center of motor and is perpendicular to center line of cylinder, L7: Straight line that passes through portion of cylinder head that is farthest away from cylinder body and is perpendicular to center line of cylinder

## Claims

1. An internal combustion engine comprising:
a cylinder body (12) having a cylinder (15);
a cylinder head (13) having an intake port (21) that communicates with the cylinder (15) and connected to the cylinder body (12);
an intake valve (25) supported on the cylinder head (13) for opening/closing the intake port (21);
an intake camshaft (29) supported on the cylinder head (13) and provided with an intake cam (27) for actuating the intake valve (25);
a throttle body (32) connected to the cylinder head (13) and formed with a passage therein;
a throttle valve (35) arranged inside the throttle body (32);
a valve shaft (36) provided on the throttle valve (35) and rotatably supported on the throttle body (32);
an actuator (37) for outputting a driving force;
a power transmission mechanism (30) having a driving link portion linked to the actuator (37) and a driven link portion (44) linked to the valve shaft (36) for transmitting the driving force of the actuator (37) to the valve shaft (36);
an intake passage (39) including at least the intake port (21) and the passage of the throttle body (32); and
a fuel injector (50) for injecting fuel into the intake passage (39), wherein the fuel injector (50) has an injection port (51) arranged on a side of the intake valve (25) relative to the valve shaft (36) in a flow direction of an intake air in the intake passage (39), wherein:
as seen along an axial direction of the intake camshaft (29), the actuator (37) is arranged on a side opposite to the cylinder head (13) with respect to a straight line (L2) that passes through an axis of the valve shaft (36) and is perpendicular to a center line (L1) of the throttle body (32), **characterized in that**
as seen along an axial direction of the intake camshaft (29), the actuator (37) and the fuel injector (50) are arranged on a side of the cylinder head (13) with respect to the center line (L1) of the throttle body (32).

2. The internal combustion engine according to claim 1, wherein the valve shaft (36) is arranged on a side of the cylinder body (12) with respect to a straight line (L5) that passes through an axis of the intake camshaft (29) and is perpendicular to a center line (L4) of the cylinder (15), as seen along an axial direction of the intake camshaft (29).

3. The internal combustion engine according to claim 1 or 2, wherein the actuator has a motor (37);
as seen along an axial direction of the intake camshaft (29), the motor (37) includes a first end portion (37a) that intersects with a straight line that passes through a center of the motor (37) and is perpendicular to a center line (L4) of the cylinder (15), and a second end portion (37b) that intersects with a straight line (L6) that passes through the center (37c) of the motor (37) and is perpendicular to the center line (L4) of the cylinder (15), wherein the second end portion (37b) is farther away from the center line (L4) of the cylinder (15) than the first end portion (37a); and
as seen along an axial direction of the intake camshaft (29), a distance (K3) between the axis of the valve shaft (36) and the center line (L4) of the cylinder (15) is shorter than a distance (K2) between the second end portion (37b) and the center line (L4) of the cylinder (15).

4. The internal combustion engine according to claim 1 or 2, wherein the actuator includes a motor (37) having a rotation shaft (37s); and
the valve shaft (36) is arranged parallel to the rotation shaft (37s) of the motor (37).

5. The internal combustion engine according to any one of claims 1 to 4, wherein a combustion chamber (16) is formed inside the cylinder body (12) and the cylinder head (13);
the intake port (21) has an intake opening (23) facing the combustion chamber (16);
the intake valve (25) has a shaft portion (25a) and an umbrella portion (25b) provided at a distal end of the shaft portion (25a) for opening/closing the intake opening (23); and
as seen along an axial direction of the intake camshaft (29), the fuel injector (50) is arranged so that a center line (L3) of the injection port (51) intersects with the umbrella portion (25b) when the intake valve (25) closes the intake opening (23).

6. The internal combustion engine according to any one of claims 1 to 5, wherein as seen along an axial direction of the intake camshaft (29), a smaller one of angles that are formed between a center line (L3) of the injection port (51) of the fuel injector (50) and a center line (L4) of the cylinder (15) is 60 degrees or less.

7. The internal combustion engine according to any one of claims 1 to 6, comprising an intake pipe (33) having an upstream end portion (33a) and a downstream end portion (33b) that is connected to the throttle body (32), wherein:
the power transmission mechanism (30) includes a first gear (41) linked to the actuator (37), a second gear (42) linked to the first gear (41), and a third gear (43) linked to the second gear (42);
as seen along an axial direction of the intake camshaft (29), a center line (33c) of the intake pipe (33) includes a first portion (331) that intersects with a straight line (L11) that passes through a center of the first gear (41) and is perpendicular to a center line (L4) of the cylinder (15), a second portion (332) that intersects with a straight line (L12) that passes through a center of the second gear (42) and is perpendicular to a center line (L4) of the cylinder (15), and a third portion (333) that intersects with a straight line (L13) that passes through a center of the third gear (43) and is perpendicular to the center line (L4) of the cylinder (15);
the second portion (332) is located on a side of the intake port (21) relative to the first portion (331); and
the third portion (333) is located on the side of the intake port (21) relative to the second portion (332).

8. The internal combustion engine according to any one of claims 1 to 7, wherein the power transmission mechanism (30) is arranged at a position overlapping with the fuel injector (50), as seen along an axial direction of the intake camshaft (29).

9. The internal combustion engine according to any one of claims 1 to 8, wherein the cylinder body (12) includes another cylinder;
the cylinder head (13) has another intake port (21) that communicates with the other cylinder;
the internal combustion engine further includes another intake valve supported on the cylinder head (13) for opening/closing the other intake port;
the intake camshaft (29) is provided with another intake cam for actuating the other intake valve;
the internal combustion engine includes another throttle body connected to the cylinder head (13);
the internal combustion engine includes another throttle valve arranged inside the other throttle body and linked to the valve shaft (36);
the valve shaft (36) has a shaft end portion (36a) extending away from the throttle valve (35) and the other throttle valve; and
the power transmission mechanism (30) is linked to the shaft end portion (36a).

10. The internal combustion engine according to any one of claims 1 to 9, comprising an air cleaner (34) connected to the intake passage (39),
wherein as seen along an axial direction of the intake camshaft (29), the air cleaner (34) is arranged on a side opposite to the cylinder body (12) with respect to a straight line (L7) that passes through a portion (13f) of the cylinder head (13) that is farthest away from the cylinder body (12) and is perpendicular to a center line (L4) of the cylinder (15).

11. The internal combustion engine according to any one of claims 1 to 9, wherein the internal combustion engine includes an air cleaner (34) connected to the intake passage (39);
the cylinder head (13) is arranged forward relative to the cylinder body (12) in a vehicle front-rear direction; and
the air cleaner (34) is arranged forward relative to the cylinder head (13) in the vehicle front-rear direction.

## Patentansprüche

1. Eine Brenn-Kraft-Maschine mit innerer Verbrennung, die umfasst:
einem Zylinder-Körper (12), der einen Zylinder (15) hat;
einen Zylinder-Kopf (13), der einen Einlass-Anschluss (21) hat, der mit dem Zylinder (15) kommuniziert und mit dem Zylinder-Körper (12) verbunden ist;
ein Einlass-Ventil (25), das an dem Zylinder-Kopf (13) gelagert ist, zum Öffnen/Schließen des Einlass-Anschluss (21);
eine Einlass-Nockenwelle (29), die am Zylinder-Kopf (13) gelagert und mit einer Einlass-Nocke (27) zur Betätigung des Einlass-Ventils (25) versehen ist;
einem Drossel-Körper (32), der mit dem Zylinder-Kopf (13) verbunden ist und in dem ein Durchgang ausgebildet ist;
ein Drossel-Ventil (35), das im Inneren des Drossel-Körpers (32) angeordnet ist;
eine Ventil-Welle (36), die an dem Drossel-Ventil (35) vorgesehen und am Drossel-Körper (32) drehbar gelagert ist;
einen Aktor (37) zur Ausgabe einer Antriebs-Kraft;
einen Leistungs-Übertragungs-Mechanismus (30), der einen Antrieb-VerbindungsAbschnitt, der mit dem Aktor (37) verbunden ist, und einen Angetrieben-VerbindungsAbschnitt (44), der mit der Ventil-Welle (36) verbunden ist, um die Antriebskraft des Aktor (37) auf die Ventil-Welle (36) zu übertragen, hat;
einen Einlass-Durchgang (39), der zumindest den Einlass-Anschluss (21) und den Durchgang des Drossel-Körpers (32) beinhaltet; und
einen Kraftstoff-Einspritzer (50) zum Einspritzen von Kraftstoff in den Einlass-Durchgang (39), wobei der Kraftstoff-Einspritzer (50) eine Einspritz-Öffnung (51) hat,
die auf einer Seite des Einlass-Ventils (25) relativ zu der Ventil-Welle (36) in einer Strömungs-Richtung einer Ansaugluft im Einlass-Durchgang (39) angeordnet ist, wobei:
wenn entlang einer axialen Richtung der Einlass-Nockenwelle (29) gesehen, der Aktor (37) auf einer dem Zylinder-Kopf (13) gegenüberliegenden Seite in Bezug auf eine Gerade (L2) angeordnet ist, die durch eine Achse der Ventil-Welle (36) verläuft und senkrecht zu einer Mittellinie (L1) des Drossel-Körpers (32) ist, **dadurch gekennzeichnet, dass**
wenn entlang einer axialen Richtung der Einlass-Nockenwelle (29) gesehen, der Aktor (37) und der Kraftstoff-Einspritzer (50) auf einer Seite des Zylinder-Kopfes (13) in Bezug auf die Mittellinie (L1) des Drossel-Körpers (32) angeordnet sind.

2. Die Brenn-Kraft-Maschine mit innerer Verbrennung gemäß Anspruch 1, wobei die Ventil-Welle (36) auf einer Seite des Zylinder-Körpers (12) in Bezug auf eine Gerade (L5) angeordnet ist, die durch eine Achse der Einlass-Nockenwelle (29) verläuft und senkrecht zu einer Mittellinie (L4) des Zylinders (15) ist, gesehen entlang einer axialen Richtung der Einlass-Nockenwelle (29).

3. Die Brenn-Kraft-Maschine mit innerer Verbrennung gemäß Anspruch 1 oder 2, wobei der Aktor einen Motor (37) hat;
wenn entlang einer axialen Richtung der Einlass-Nockenwelle (29) gesehen, beinhaltet der Motor (37) einen ersten Endabschnitt (37a), der sich mit einer geraden Linie schneidet, die durch ein Zentrum des Motors (37) verläuft und senkrecht zu einer Mittellinie (L4) des Zylinders (15) ist, und einen zweiten Endabschnitt (37b), der sich mit einer geraden Linie (L6) schneidet, die durch das Zentrum (37c) des Motors (37) verläuft und senkrecht zu der Mittellinie (L4) des Zylinders (15) ist, wobei der zweite Endabschnitt (37b) weiter von der Mittellinie (L4) des Zylinders (15) entfernt ist als der erste Endabschnitt (37a); und
wenn entlang einer axialen Richtung der Einlass-Nockenwelle (29) gesehen, ein Abstand (K3) zwischen der Achse der Ventil-Welle (36) und der Mittellinie (L4) des Zylinders (15) kürzer ist als ein Abstand (K2) zwischen dem zweiten Endabschnitt (37b) und der Mittellinie (L4) des Zylinders (15).

4. Die Brenn-Kraft-Maschine mit innerer Verbrennung gemäß Anspruch 1 oder 2, wobei der Aktor einen Motor (37), der eine Dreh-Welle (37s) hat, beinhaltet; und
die Ventil-Welle (36) parallel zur Dreh-Welle (37s) des Motors (37) angeordnet ist.

5. die Brenn-Kraft-Maschine mit innerer Verbrennung gemäß einem der Ansprüche 1 bis 4, wobei innerhalb des Zylinder-Körpers (12) und des Zylinder-Kopfes (13) ein Brennraum (16) ausgebildet ist;
der Einlass-Durchgang (21) eine Einlass-Öffnung (23) hat, die dem Brennraum (16) zugewandt ist;
das Einlass-Ventil (25) einen Schaft-Abschnitt (25a) und einen Schirm-Abschnitt (25b) hat, der an einem distalen Ende des Schaft-Abschnitts (25a) zum Öffnen/Schließen der Einlass-Öffnung (23) vorgesehen ist; und
wenn entlang einer axialen Richtung der Einlass-Nockenwelle (29) gesehen, ist der Kraftstoff-Einspritzer (50) angeordnet, so dass eine Mittellinie (L3) der Einspritz-Öffnung (51) den Schirm-Abschnitt (25b) schneidet, wenn das Einlass-Ventil (25) die Einlass-Öffnung (23) schließt.

6. Die Brenn-Kraft-Maschine mit innerer Verbrennung gemäß einem der Ansprüche 1 bis 5, wobei wenn entlang einer axialen Richtung der Einlass-Nockenwelle (29) gesehen, ein kleinerer von Winkeln, die zwischen einer Mittellinie (L3) der Einspritz-Öffnung (51) des Kraftstoff-Einspritzers (50) und einer Mittellinie (L4) des Zylinders (15) gebildet werden, 60 Grad oder weniger beträgt.

7. Die Brenn-Kraft-Maschine mit innerer Verbrennung gemäß einem der Ansprüche 1 bis 6, umfassend ein Einlass-Rohr (33), das einen stromaufwärtigen Endabschnitt (33a) und einen stromabwärtigen Endabschnitt (33b), der mit dem Drossel-Körper (32) verbunden ist, hat, wobei:
der Leistungs-Übertragungs-Mechanismus (30) ein erstes Zahnrad (41), das mit dem Aktor (37) verbunden ist, ein zweites Zahnrad (42), das mit dem ersten Zahnrad (41) verbunden ist, und ein drittes Zahnrad (43), das mit dem zweiten Zahnrad (42) verbunden ist, beinhaltet;
wenn entlang einer axialen Richtung der Einlass-Nockenwelle (29) gesehen, eine Mittellinie (33c) des Einlass-Rohrs (33) einen ersten Abschnitt (331) beinhaltet, der eine gerade Linie (L11) schneidet, die durch ein Zentrum des ersten Zahnrads (41) verläuft und senkrecht zu einer Mittellinie (L4) des Zylinders (15) ist, einen zweiten Abschnitt (332), der sich mit einer geraden Linie (L12) schneidet, die durch ein Zentrum des zweiten Zahnrads (42) verläuft und senkrecht zu einer Mittellinie (L4) des Zylinders (15) ist, und einen dritten Abschnitt (333), der sich mit einer geraden Linie (L13) schneidet, die durch ein Zentrum des dritten Zahnrads (43) verläuft und senkrecht zu der Mittellinie (L4) des Zylinders (15) ist;
der zweite Abschnitt (332) befindet sich auf einer Seite der Einlass-Öffnung (21) relativ zu dem ersten Abschnitt (331) angeordnet ist; und
der dritte Abschnitt (333) befindet sich auf der Seite der Einlass-Öffnung (21) relativ zum zweiten Abschnitt (332).

8. Die Brenn-Kraft-Maschine mit innerer Verbrennung gemäß einem der Ansprüche 1 bis 7, wobei der Leistungs-Übertragungs-Mechanismus (30) an einer Position angeordnet ist, die sich mit dem Kraftstoff-Einspritzer (50) überschneidet, wenn gesehen entlang einer axialen Richtung der Einlass-Nockenwelle (29).

9. Die Brenn-Kraft-Maschine mit innerer Verbrennung gemäß einem der Ansprüche 1 bis 8, wobei der Zylinder-Körper (12) einen weiteren Zylinder enthält;
der Zylinder-Kopf (13) einen weiteren Einlass-Durchgang (21) hat, der mit dem anderen Zylinder in Verbindung steht;
der Brenn-Kraft-Maschine mit innerer Verbrennung ferner ein weiteres, am Zylinder-Kopf (13) gelagertes Einlass-Ventil zum Öffnen/Schließen des anderen Einlass-Anschluss aufweist;
die Einlass-Nockenwelle (29) mit einem weiteren Einlass-Nocken zur Betätigung des anderen Einlass-Ventils versehen ist;
der Brenn-Kraft-Maschine mit innerer Verbrennung einen weiteren Drossel-Körper enthält, der mit dem Zylinder-Kopf (13) verbunden ist;
der Brenn-Kraft-Maschine mit innerer Verbrennung ein weiteres Drossel-Ventil enthält, das innerhalb des anderen Drossel-Körpers angeordnet und mit der Ventil-Welle (36) verbunden ist;
die Ventil-Welle (36) einen Wellen-End-Abschnitt (36a) hat, der sich von dem Drossel-Ventil (35) und dem anderen Drossel-Ventil weg erstreckt; und
der Leistungs-Übertragungs-Mechanismus (30) ist mit dem Wellenendabschnitt (36a) verbunden.

10. Die Brenn-Kraft-Maschine mit innerer Verbrennung gemäß einem der Ansprüche 1 bis 9, umfassend einen Luft-Filter (34), der mit dem Einlass-Durchgang (39) verbunden ist,
wobei der Luft-Filter (34) entlang einer axialen Richtung der Einlass-Nockenwelle (29) gesehen auf einer dem Zylinder-Körper (12) gegenüberliegenden Seite in Bezug auf eine gerade Linie (L7) angeordnet ist, die durch einen Abschnitt (13f) des Zylinder-Kopfes (13) verläuft, der am weitesten von dem Zylinder-Körper (12) entfernt ist und senkrecht zu einer Mittellinie (L4) des Zylinders (15) steht.

11. Die Brenn-Kraft-Maschine mit innerer Verbrennung gemäß einem der Ansprüche 1 bis 9, wobei der Brenn-Kraft-Maschine mit innerer Verbrennung einen Luft-Filter (34), der mit dem Einlass-Durchgang (39) verbunden ist, beinhaltet;
der Zylinder-Kopf (13) relativ zum Zylinder-Körper (12) in einer Fahrzeug-Vorder-Rück-Richtung vorne angeordnet ist; und
der Luft-Filter (34) relativ zum Zylinder-Kopf (13) in der Fahrzeug-Vorder-RückRichtung vorne angeordnet ist.

## Revendications

1. Moteur à combustion interne comprenant :
un corps de cylindre (12) présentant un cylindre (15) ;
une culasse (13) présentant un port d'admission (21) qui communique avec le cylindre (15) et connectée au corps de cylindre (12) ;
une soupape d'admission (25) installée sur la culasse (13) pour ouvrir/fermer le port d'admission (21) ;
un arbre à came d'admission (29) installé sur la culasse (13) et doté d'une came d'admission (27) pour actionner la soupape d'admission (25) ;
un carburateur (32) connecté à la culasse (13) et constitué avec un passage dans celle-ci ;
une soupape de carburateur (35) disposée à l'intérieur du carburateur (32) ;
une tige de soupape (36) installée sur la soupape de carburateur (35) et soutenue en rotation sur le carburateur (32) ;
un actionneur (37) pour générer en sortie une force d'entraînement ;
un mécanisme de transmission de puissance (30) présentant une partie de liaison d'entraînement liée à l'actionneur (37) et une partie de liaison entraînée (44) liée à la tige de soupape (36) pour transmettre la force d'entraînement de l'actionneur (37) à la tige de soupape (36) ;
un passage d'admission (39) incluant au moins le port d'admission (21) et le passage du carburateur (32) ; et
un injecteur de carburant (50) pour injecter un carburant dans le passage d'admission (39), dans lequel l'injecteur de carburant (50) présente un port d'injection (51) disposé sur un côté de la soupape d'admission (25) par rapport à la tige de soupape (36) dans une direction de flux d'un air d'admission dans le passage d'admission (39), dans lequel :
tel qu'observé sur une direction axiale de l'arbre à came d'admission (29), l'actionneur (37) est disposé sur un côté opposé à la culasse (13) par rapport à une ligne droite (L2) qui traverse un axe de la tige de soupape (36) et est perpendiculaire à une ligne centrale (L1) du carburateur (32), **caractérisé en ce que**
tel qu'observé sur une direction axiale de l'arbre à came d'admission (29), l'actionneur (37) et l'injecteur de carburant (50) sont disposés sur un côté de la culasse (13) par rapport à la ligne centrale (L1) du carburateur (32).

2. Le moteur à combustion interne selon la revendication 1, dans lequel la tige de soupape (36) est disposée sur un côté du corps de cylindre (12) par rapport à une ligne droite (L5) qui traverse un axe de l'arbre à came d'admission (29) et est perpendiculaire à une ligne centrale (L4) du cylindre (15), tel qu'observé sur une direction axiale de l'arbre à came d'admission (29).

3. Le moteur à combustion interne selon la revendication 1 ou 2, dans lequel l'actionneur dispose d'un moteur (37) ;
tel qu'observé sur une direction axiale de l'arbre à came d'admission (29), le moteur (37) inclut une première partie d'extrémité (37a) qui coupe une ligne droite qui traverse un centre du moteur (37) et est perpendiculaire à une ligne centrale (L4) du cylindre (15), et une deuxième partie d'extrémité (37b) qui coupe une ligne droite (L6) qui traverse le centre (37c) du moteur (37) et est perpendiculaire à la ligne centrale (L4) du cylindre (15), dans lequel la deuxième partie d'extrémité (37b) est plus éloignée de la ligne centrale (L4) du cylindre (15) que la première partie d'extrémité (37a) ; et
telle qu'observée sur une direction axiale de l'arbre à came d'admission (29), une distance (K3) entre l'axe de la tige de soupape (36) et la ligne centrale (L4) du cylindre (15) est plus courte qu'une distance (K2) entre la deuxième partie d'extrémité (37b) et la ligne centrale (L4) du cylindre (15).

4. Le moteur à combustion interne selon la revendication 1 ou 2, dans lequel l'actionneur inclut un moteur (37) présentant un arbre rotatif (37s) ; et
la tige de soupape (36) est disposée parallèlement à l'arbre rotatif (37s) du moteur (37).

5. Le moteur à combustion interne selon l'une quelconque des revendications 1 à 4, dans lequel une chambre de combustion (16) est constituée à l'intérieur du corps de cylindre (12) et de la culasse (13) ;
le port d'admission (21) présente une ouverture d'admission (23) orientée vers la chambre de combustion (16) ;
la soupape d'admission (25) présente une partie de tige (25a) et une partie de chapeau (25b) disposée à une extrémité distale de la partie de tige (25a) pour ouvrir/fermer l'ouverture d'admission (23) ; et
tel qu'observé sur une direction axiale de l'arbre à came d'admission (29), l'injecteur de carburant (50) est disposé de sorte qu'une ligne centrale (L3) du port d'injection (51) coupe la partie de chapeau (25b) lorsque la soupape d'admission (25) ferme l'ouverture d'admission (23).

6. Le moteur à combustion interne selon l'une quelconque des revendications 1 à 5, dans lequel tel qu'observé sur une direction axiale de l'arbre à came d'admission (29), un plus petit des angles qui sont constitués entre une ligne centrale (L3) du port d'injection (51) de l'injecteur de carburant (50) et une ligne centrale (L4) du cylindre (15) est inférieur ou égal à 60 degrés.

7. Le moteur à combustion interne selon l'une quelconque des revendications 1 à 6, comprenant une pipe d'admission (33) présentant une partie d'extrémité amont (33a) et une partie d'extrémité aval (33b) qui est connectée au carburateur (32), dans lequel :
le mécanisme de transmission de puissance (30) inclut un premier pignon (41) relié à l'actionneur (37), un deuxième pignon (42) relié au premier pignon (41) et un troisième pignon (43) relié au deuxième pignon (42) ;
tel qu'observé sur une direction axiale de l'arbre à came d'admission (29), une ligne centrale (33c) de la pipe admission (33) inclut une première partie (331) qui coupe une ligne droite (L11) qui traverse un centre du premier pignon (41) et est perpendiculaire à une ligne centrale (L4) du cylindre (15), une deuxième partie (332) qui coupe une ligne droite (L12) qui traverse un centre du deuxième pignon (42) et est perpendiculaire à une ligne centrale (L4) du cylindre (15), et une troisième partie (333) qui coupe une ligne droite (L13) qui traverse un centre du troisième pignon (43) et est perpendiculaire à la ligne centrale (L4) du cylindre (15) ;
la deuxième partie (332) est située sur un côté du port d'admission (21) par rapport à la première partie (331) ; et
la troisième partie (333) est située sur le côté du port d'admission (21) par rapport à la deuxième partie (332).

8. Le moteur à combustion interne selon l'une quelconque des revendications 1 à 7, dans lequel le mécanisme de transmission de puissance (30) est sur une position chevauchant l'injecteur de carburant (50), tel qu'observé sur une direction axiale de l'arbre à came d'admission (29).

9. Le moteur à combustion interne selon l'une quelconque des revendications 1 à 8, dans lequel le corps de cylindre (12) inclut un autre cylindre ;
la culasse (13) présente un autre port d'admission (21) qui communique avec l'autre cylindre ;
le moteur de combustion interne inclut en outre une autre soupape d'admission installée sur la culasse (13) pour ouvrir/fermer l'autre port d'admission ;
l'arbre à came d'admission (29) est doté d'une autre came d'admission pour actionner l'autre soupape d'admission ;
le moteur de combustion interne inclut un autre carburateur connecté à l'autre culasse (13) ;
le moteur à combustion interne inclut une autre soupape de carburateur disposée à l'intérieur de l'autre carburateur et reliée à la tige de soupape (36) ;
la tige de soupape (36) présente une partie d'extrémité de tige (36a) se prolongeant en s'éloignant de la soupape de carburateur (35) et de l'autre soupape de carburateur ; et
le mécanisme de transmission de puissance (30) est relié à la partie d'extrémité de tige (36a).

10. Le moteur à combustion interne selon l'une quelconque des revendications 1 à 9, comprenant un filtre à air (34) raccordé au passage d'admission (39),
dans lequel tel qu'observé sur une direction axiale de l'arbre à came d'admission (29), le filtre à air (34) est disposé sur un côté opposé au corps de cylindre (12) par rapport à une ligne droite (L7) qui traverse une partie (13f) de la culasse (13) qui est la plus éloignée du corps de cylindre (12) et est perpendiculaire à une ligne centrale (L4) du cylindre (15).

11. Le moteur à combustion interne selon l'une quelconque des revendications 1 à 9, dans lequel le moteur à combustion interne inclut un filtre à air (34) raccordé au passage d'admission (39) ;
la culasse (13) est disposée en avant par rapport au corps de cylindre (12) dans une direction avant-arrière de véhicule ; et
le filtre à air (34) est disposé en avant par rapport à la culasse (13) dans la direction avant-arrière de véhicule.
